# EUROPEAN PATENT APPLICATION

(11) **EP 4 246 665 A1**
(43) Date of publication of application: **20.09.2023**
(21) Application number: 23161489.2
(22) Date of filing: 13.03.2023
(51) Int. Cl.: H01M 10/613, H01M 10/647, H01M 10/658, H01M 50/211, H01M 50/244, H01M 50/262, H01M 50/291, H01M 50/342, H01M 50/367, H01M 50/383

(54) **BATTERY PACK**

(30) Priority: 14.03.2022 KR 20220031683
(71) Applicant: SK On Co., Ltd., Seoul 03161 (KR)
(72) Inventor: LEE, Seung Hun, 34124 Daejeon (KR); LIM, Ji Hoon, 34124 Daejeon (KR); LEE, Tae Gu, 34124 Daejeon (KR); CHOI, Yang Kyu, 34124 Daejeon (KR)
(74) Representative: Prüfer & Partner mbB Patentanwälte · Rechtsanwälte

(57) **Abstract**

A battery pack includes a pack housing having an internal space; and a battery module including a plurality of battery cells and accommodated in the internal space, wherein the pack housing includes a support frame opposing at least one side of the battery module and having a venting passage formed therein, and wherein the support frame includes a plurality of guide blocks inserted into the battery module; and an opening disposed between the plurality of guide blocks and communicating with the venting passage and the internal space.

## Description

### BACKGROUND

### 1. FIELD

Example embodiments of the present disclosure relate to a battery module and a battery pack including the same.

### 2. DESCRIPTION OF RELATED ART

A secondary battery may be charged and discharged differently from primary batteries, and has attracted attention as a power source for a power source for various mobile devices and electric vehicles. For example, a type of secondary battery using a non-aqueous electrolyte having high energy density may have good output and may be used for driving of a motor of an electric vehicle by connecting a plurality of the batteries in series.

A battery module applied to an electric vehicle may be modularized by electrically connecting a plurality of battery cells due to the need for high power and high capacity, and an electric vehicle may include a plurality of such battery modules to obtain high power.

The electrode assembly of the battery cell may emit heat while charging and discharging, and internal temperature of the battery module may rise due to this heat, resulting in deterioration in electrical performance or ignition. Further, when a large number of secondary battery cells are mounted in a battery module, flames generated by ignition of one battery cell may be transferred to other battery cells around the battery cell, causing a chain of ignition or explosion.

### SUMMARY

An example embodiment of the present disclosure is to provide a battery pack which may prevent high-temperature and high-pressure gas or particles emitted from a battery module from spreading to other portions of the battery module or to other adjacent battery modules.

An example embodiment of the present disclosure is to provide a structure in which a battery module may be swiftly and accurately assembled with a battery pack.

An example embodiment of the present disclosure is to provide a structure in which high-temperature and high-pressure gas or particles generated by the battery module may be safely discharged to the outside of a battery pack.

According to an example embodiment of the present disclosure, a battery pack includes a pack housing having an internal space; and a battery module including a plurality of battery cells and accommodated in the internal space, wherein the pack housing includes a support frame opposing at least one side of the battery module and having a venting passage formed therein, and wherein the support frame includes a plurality of guide blocks inserted into the battery module; and an opening disposed between the plurality of guide blocks and communicating with the venting passage and the internal space.

At least a portion of the plurality of battery cells may be stacked in a first direction, and the plurality of guide blocks may be spaced apart from each other in the first direction.

At least one of the plurality of guide blocks may protrude from the support frame in a second direction toward the battery module, and the second direction may be perpendicular to the first direction.

Both ends of at least one of the plurality of guide blocks in the third direction may have different widths, and the third direction may be perpendicular to both the first direction and the second direction.

The venting passage may extend in the first direction from an internal portion of the support frame.

The battery module may include a plurality of insertion grooves into which the plurality of guide blocks are inserted.

The battery module may further include a venting hole disposed between the plurality of insertion grooves and opposing the opening.

The battery module may further include one or more end plates opposing the plurality of battery cells, and the insertion groove may be disposed on at least one end of the end plate.

The battery module may include a plurality of sub-modules in which the plurality of battery cells are stacked in a first direction, and the plurality of sub-modules and the one or more end plates are alternately disposed in the first direction.

The battery module may further include an insulating member disposed between the one or more end plates and the sub-module.

The heat insulating member may include at least one of mica, ceramic wool, or Aerogel.

The battery pack may further include a fastening member fastening the one or more end plates to the pack housing.

The fastening member may be fastened to the pack housing by penetrating the one or more end plates in a direction perpendicular to the first direction.

The plurality of guide blocks may be configured to guide a position where the battery module is seated in the pack housing.

The battery module may include a plurality of insertion grooves into which the plurality of guide blocks are inserted, wherein a width of upper end of the guide block is narrower than a width of the insertion groove.

A battery pack includes a battery module including a plurality of sub-modules disposed side by side in a first direction; and a pack housing having an internal space in which the battery module is accommodated, wherein the pack housing includes a support frame opposing at least one side of the battery module and having a venting passage formed therein, the support frame includes a plurality of openings spaced apart from each other in the first direction and communicating with the venting passage and the internal space; and one or more guide blocks disposed between the plurality of openings and inserted into the battery module.

The one or more guide blocks and the plurality of openings may be alternately disposed in the first direction.

The battery module may further include an end plate opposing at least one of the plurality of sub-modules in the first direction and having an insertion groove into which the one or more guide blocks are inserted.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating a battery pack according to an example embodiment of the present disclosure;
FIG. 2 is an exploded perspective diagram illustrating a battery pack according to an example embodiment of the present disclosure;
FIG. 3 is an exploded perspective diagram illustrating a battery module according to an example embodiment of the present disclosure;
FIG. 4 is a diagram illustrating a state in which a battery module is accommodated in a battery pack according to an example embodiment of the present disclosure;
FIG. 5 is a perspective diagram illustrating an end plate included in a battery module according to an example embodiment of the present disclosure;
FIG. 6 is a cross-sectional diagram taken along line I-I' in FIG. 2;
FIG. 7 is a cross-sectional diagram taken along line II-II' in FIG. 2; and
FIG. 8 is a diagram illustrating a partition structure of a battery pack according to an example embodiment of the present disclosure.

### DETAILED DESCRIPTION

It is to be understood that the terms or words used in this description and the following claims must not be construed to have meanings which are general or may be found in a dictionary. Therefore, considering the notion that an inventor may most properly define the concepts of the terms or words to best explain his or her invention, the terms or words must be understood as having meanings or concepts that conform to the technical spirit of the present disclosure. Also, since the example embodiments set forth herein and the configurations illustrated in the drawings are nothing but a mere example and are not representative of all technical spirits of the present disclosure, it is to be understood that various equivalents and modifications may replace the example embodiments and configurations at the time of the present application.

In the drawings, same elements will be indicated by same reference numerals. Also, redundant descriptions and detailed descriptions of known functions and elements that may unnecessarily make the gist of the present disclosure obscure will not be provided. In the accompanying drawings, some elements may be exaggerated, omitted or briefly illustrated, and the sizes of the elements do not necessarily reflect the actual sizes of these elements.

An expression used in the singular encompasses the expression of the plural, unless it has a clearly different meaning in the context.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right of the example embodiments.

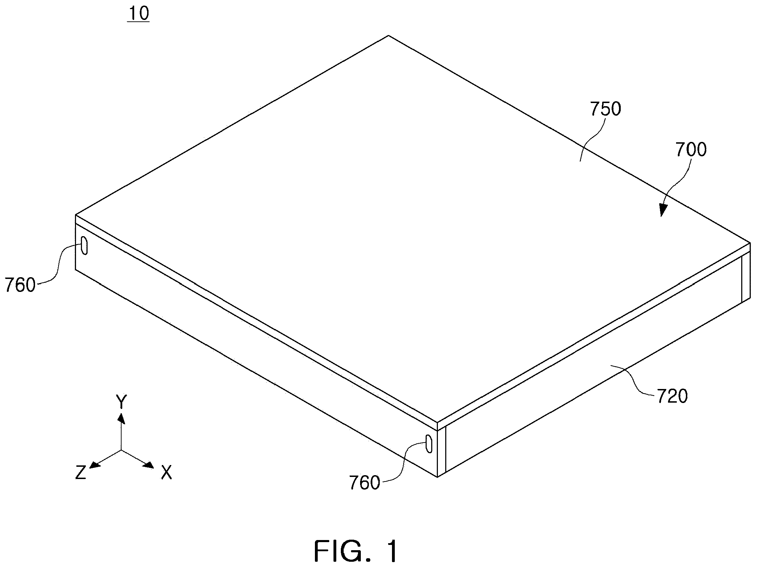

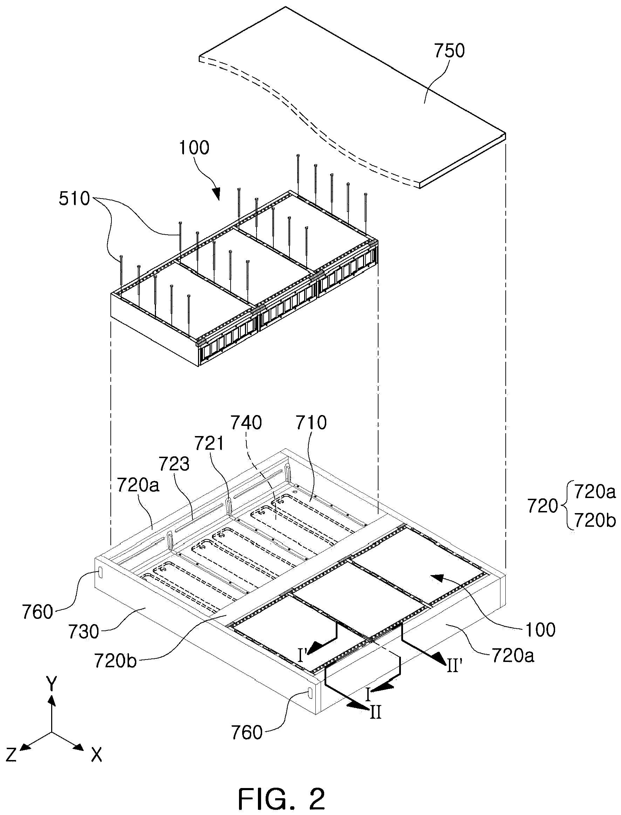

FIG. 1 is a perspective diagram illustrating a battery pack 10 according to an example embodiment. FIG. 2 is an exploded perspective diagram illustrating a battery pack 10 according to an example embodiment.

The battery pack 10 may include one or more battery modules 100 for outputting or storing electrical energy and a pack housing 700 having an internal space in which the battery modules 100 are accommodated.

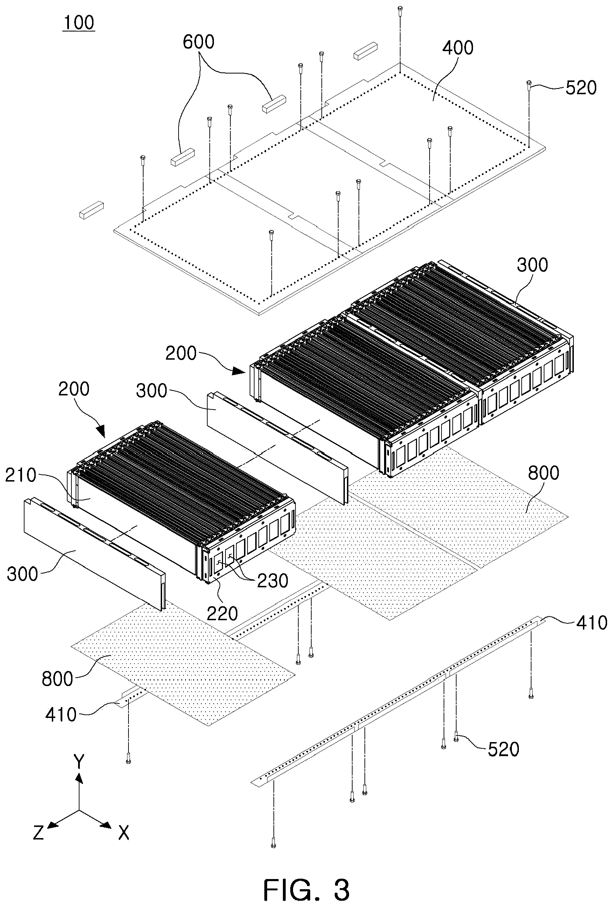

The battery module 100 may include one or more battery cells (e.g., 210 in FIG. 3) which may be charged and discharged and may store or discharge electrical energy. For example, the battery cell (210 in FIG. 3) may include a secondary battery such as a lithium ion battery or a nickel-hydrogen battery.

As illustrated in FIG. 2, the battery module 100 may be provided in a substantially hexahedral shape. However, the external appearance of the battery module 100 is not limited thereto, and may be provided in various shapes.

The battery module 100 accommodated in the battery pack 10 may include one or more sub-modules (e.g., 200 in FIG. 3). Each sub-module (200 in FIG. 3) may include a plurality of battery cells (210 in FIG. 3) . The plurality of sub-modules (200 in FIG. 3) may be arranged side by side in one direction (e.g., the Z-axis direction in FIG. 3) and may be included in at least a portion of the battery module 100. The number of required sub-modules (200 in FIG. 3) may be determined according to the power value required for the battery module 100, and the battery module 100 may be manufactured by assembling these sub-modules (200 in FIG. 3) . A detailed description of the sub-module (200 in FIG. 3) and the battery module 100 including the sub-module will be described later with reference to FIG.

Referring to FIG. 2, the pack housing 700 of the battery pack 10 may include a lower frame 710 in which the battery module 100 is seated, a plurality of support frames 720 coupled to the lower frame 710 and opposing at least one side of the battery module 100, and a cover frame 750 covering the internal space.

The lower frame 710 may form the lower surface of the pack housing 700. A plurality of battery modules 100 may be seated on the lower frame 710. For example, the lower frame 710 may be provided as a rectangular plate-shaped member or a polygonal plate-shaped member. However, the specific shape of the lower frame 710 is not limited thereto.

The lower frame 710 may include a material having rigidity. For example, at least a portion of the lower frame 710 may include a metal such as aluminum or stainless steel. When the lower frame 710 includes aluminum, heat energy generated in the battery module 100 may be swiftly dissipated to the outside of the battery pack 10 due to the excellent thermal conductivity of aluminum.

To increase the heat dissipation effect, the lower frame 710 may include a cooling member 740. The cooling member 740 may be disposed outside the lower frame 710 or within the lower frame 710. A passage through which air or cooling fluid flows may be formed in the cooling member 740.

One or more support frames 720 structurally supporting the battery pack 10 may be coupled to the lower frame 710. The support frame 720 may include a plurality of side frames 720a coupled to edges of the lower frame 710 and a partition frame 720b disposed between the side frames 720a and partitioning the internal space.

The pack housing 700 may further include an end frame 730 disposed on an end of the support frame 720. The end frame 730 may be coupled to the support frame 720 and may form a side wall of the pack housing 700.

The support frame 720 and the end frame 730 may be formed of a metal material having a predetermined level or higher of rigidity. For example, to obtain high heat dissipation, at least a portion of the support frame 720 may include aluminum having high thermal conductivity.

In example embodiments, at least two of the lower frame 710, the support frame 720, and the end frame 730 may be integrally formed or provided as separate members and may be coupled to each other.

As the battery module 100 is charged and discharged under harsh conditions, flame or high-temperature gas may be generated in the battery module 100. To safely discharge such flames or gases to the outside of the battery module 100, the battery pack 10 may include one or more outlets 760 communicating with the internal space. For example, the outlet 760 may be disposed on at least one surface of the pack housing 700 and may communicate with the internal space of the battery pack 10 through an opening 723 disposed in the support frame 720.

The pack housing 700 may further include a cover frame 750 covering and closing the internal space. For example, the cover frame 750 may be coupled to the support frame 720 on a side opposite to the lower frame 710 and may cover the internal space of the battery pack 10.

A heat spread prevention member (not illustrated) may be disposed between the cover frame 750 and the battery module 100. For example, the heat spread prevention member (not illustrated) may be provided as a plate-shaped member including at least one of mica, ceramic wool, and Aerogel. The heat spread prevention member (not illustrated) may prevent flame or high-temperature gas generated in the battery module 100 from spreading to other battery modules 100 along the lower surface of the cover frame 750. Also, the heat spread prevention member (not illustrated) may prevent flame or high-temperature gas generated by the battery module 100 from being ejected to the upper portion of the battery pack 10.

One or more guide blocks 721 protruding toward the battery module 100 may be disposed on the support frame 720. For example, a plurality of guide blocks 721 spaced apart from each other in one direction (e.g., the Z-axis direction) and protruding toward the battery module 100 may be disposed on the side frame 720a.

At least a portion of the guide block 721 may be inserted into the battery module 100. The guide block 721 may guide the battery module 100 to be accurately seated on the lower frame 710 during the process of manufacturing the battery pack 10. Also, the guide block 721 may block spreading of high-temperature and high-pressure gas or flame generated in one portion of the battery module 100 to other portions of the battery module 100 or other battery modules.

The battery pack 10 may further include a first fastening member 510 firmly fixing the battery module 100 to the pack housing 700. For example, the first fastening member 510 may penetrate through the battery module 100 and may be fastened to the lower frame 710, and accordingly, the battery module 100 may be firmly fixed to the lower frame 710. However, the configuration of the first fastening member 510 is not limited to the above example, and any configuration for fixing the battery module 100 to the pack housing 700 may be used.

FIG. 3 is an exploded perspective diagram illustrating a battery module 100 according to an example embodiment. The battery module 100 described in FIG. 3 may be the same as the battery module 100 previously described in FIGS. 1 and 2, and accordingly, overlapping descriptions may not be provided.

The battery module 100 may include one or more sub-modules 200 and a plurality of end plates 300 opposing at least one side of the sub-modules 200.

The sub-module 200 may include battery cells 210 stacked side by side and a cover assembly 220 covering at least one side of the stacked battery cells 210.

The battery cell 210 may include an electrode assembly including a positive electrode, a negative electrode, and a separator, and may charge and discharge electrical energy.

The cover assembly 220 may be coupled to at least one side of the stacked battery cells 210 and may protect the battery cells 210. The plurality of battery cells 210 may be electrically connected to each other by a busbar (not illustrated) disposed in the cover assembly 220. As the battery cells 210 repeatedly charged and discharged, flames or high-temperature gas may be generated in the battery cells 210, and the flames or gases may be generated to the outside of the battery module 100 through the venting hole 230 disposed in the cover assembly 220. The venting hole 230 may be disposed to oppose the support frame 720. For example, when the battery cells 210 are stacked in a first direction (Z-axis direction) and opposes the support frame 720 in a second direction (X-axis direction) perpendicular to the first direction (Z-axis direction), the venting hole 230 may be disposed between the stacked battery cells 210 and the support frame 720 and may oppose the support frame 720 in the second direction.

The end plate 300 may be disposed to oppose at least one side of the sub-module 200. For example, the end plate 300 may be disposed between the sub-modules 200 or may be disposed on both ends of the battery module 100.

In example embodiments, the sub-module 200 and the end plate 300 of the battery module 100 may be alternately disposed in a first direction (e.g., a Z-axis direction). For example, as illustrated in FIG. 3, the end plate 300 and the sub-module 200 may be alternately disposed from one end of the battery module 100 to the other end in the first direction (Z-axis direction).

The end plate 300 of the battery module 100 may be fastened to the pack housing 700. For example, the first fastening member 510 may penetrate through at least a portion of the plurality of end plates 300 and may be fastened to the lower frame 710 of the pack housing 700, and accordingly, the battery module 100 may be fixed to the pack housing 700.

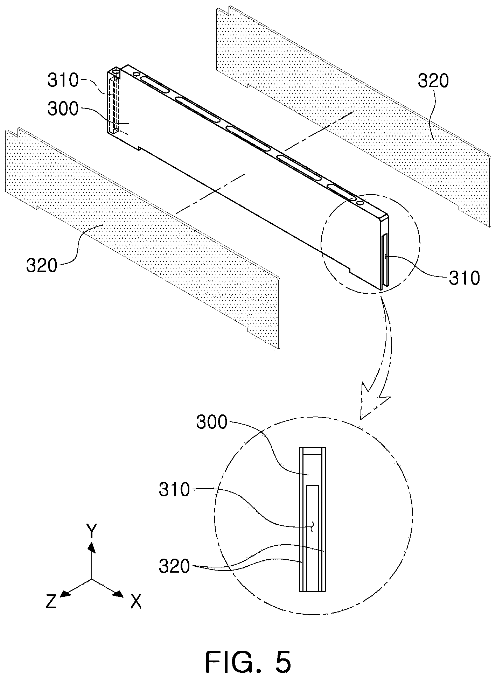

The end plate 300 may structurally support the battery module 100 by including a material having rigidity. At least a portion of the plurality of end plates 300 may be disposed between the sub-modules 200 and may block high-temperature heat or flame from transferring between the sub-modules 200. A heat insulating member (e.g., 320 in FIG. 5) may be disposed between the end plate 300 and the sub-module 200, and accordingly, heat or flame may be more effectively blocked. The heat insulation member (320 in FIG. 5) may be attached to the end plate 300 through an adhesive material such as a binder.

The end plate 300 may be assembled with the guide block 721 of the support frame 720 and may form an partition structure between the respective sub-modules 200, and accordingly, spreading of high-temperature gas or flame from one sub-module 200 to another sub-module 200 may be hindered or blocked.

When the battery module 100 has a plurality of sub-modules 200, one sub-module 200 and another sub-module 200 may be electrically connected to each other by a connection member 600. For example, the connection member 600 may include a conductive material and may be disposed to be in contact with both adjacent sub-modules 200.

The cover plate 400 may be coupled to the upper side (e.g., in a positive Y-axis direction) of the sub-module 200 and the end plate 300. The second fastening member 520 may be used to combine the sub-module 200 and the cover plate 400 or the end plate 300 and the cover plate 400 . For example, the second fastening member 520 may be a bolt penetrating through the cover plate 400 and fastened to the sub-module 200.

The battery module 100 may further include a reinforcing member 410 coupled to at least one of the sub-module 200 and the end plate 300, in addition to the cover plate 400. For example, as illustrated in FIG. 3, a reinforcing member 410 covering lower (e.g., Y-axis negative direction) corners of the sub-module 200 and the end plate 300 may be fastened. Similarly to the cover plate 400, the reinforcing member 410 may be coupled to the sub-module 200 or the end plate 300 through the second fastening member 520.

To increase heat dissipation efficiency, the battery module 100 may further include a heat dissipation member 800. The heat dissipation member 800 may be disposed on a side of the battery module 100 opposing the lower frame 710 or the cover frame 750 and may be in contact with at least a portion of the battery cells 210. For example, as illustrated in FIG. 3, a heat dissipation member 800 may be disposed below the stacked battery cells 210. The heat dissipation member 800 may be disposed to fill a gap between the battery cell 210 and the lower frame 710, and accordingly, a heat transfer path between the battery module 100 and the pack housing 700 by conduction may be formed. For example, the heat dissipation member 800 may be a thermal adhesive.

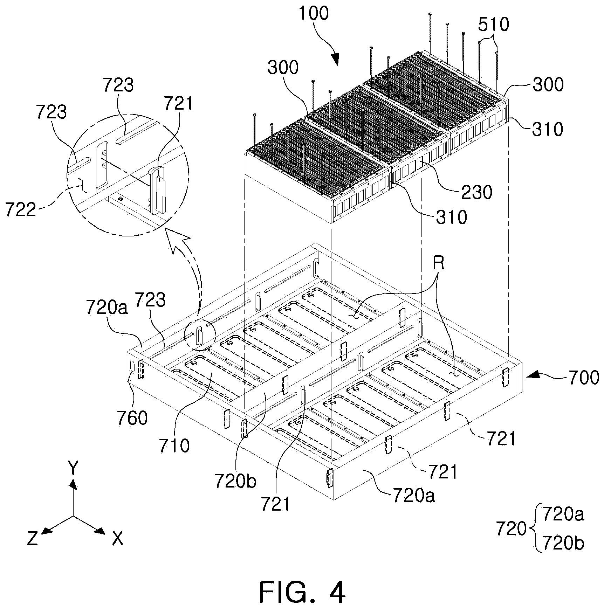

The battery module 100 may be seated on and fixed to the lower frame 710 of the pack housing 700. For example, the plurality of end plates 300 included in the battery module 100 may be coupled to the lower frame 710 such that the battery module 100 may be fixed to the lower frame 710. While the battery module 100 is seated, the end plate 300 may be assembled with the guide block 721 of the pack housing 700 and may guide the battery module 100 to be seated in an accurate position. Simultaneously, the end plate 300 and the guide block 721 may form a structure of isolating the plurality of sub-modules 200 included in the battery module 100 from each other. Hereinafter, this partition structure will be described with reference to FIGS. 4 to 8.

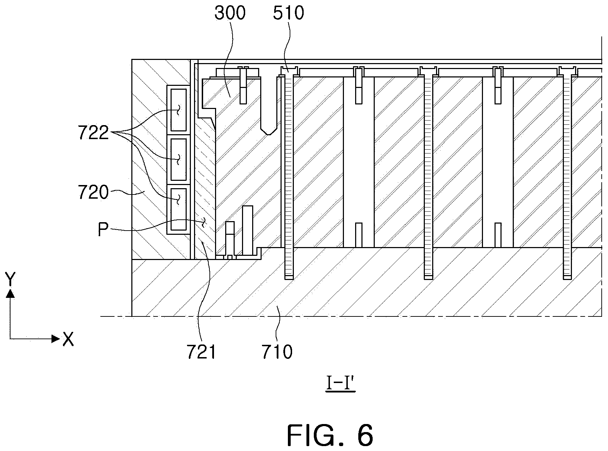

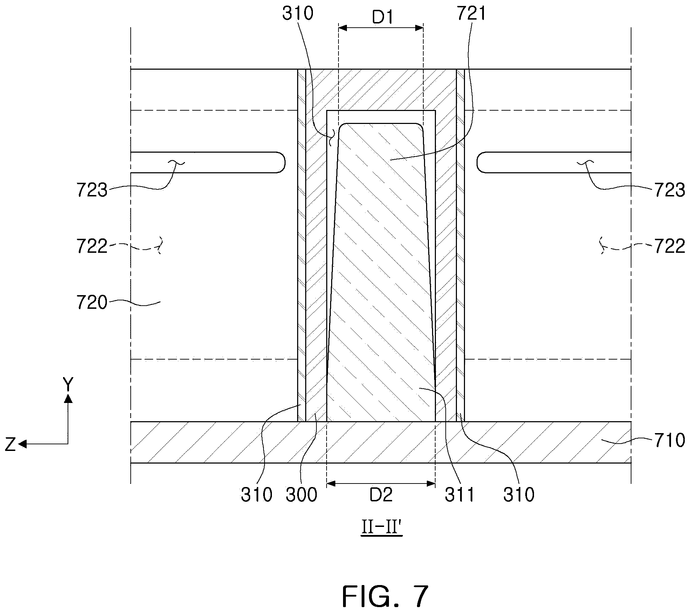

FIG. 4 is a diagram illustrating a state in which a battery module 100 is accommodated in a battery pack 10 according to an example embodiment. FIG. 5 is a perspective diagram illustrating an end plate 300 included in a battery module 100 according to an example embodiment. FIG. 6 is a cross-sectional diagram taken along line I-I' in FIG. 2. FIG. 7 is a cross-sectional diagram taken along line II-II' in FIG. 2. Since the battery module 100 described in FIGS. 4 to 7 and the battery pack 10 including the same may correspond to the battery module 100 and the battery pack 10 described in FIGS. 1 to 3 above, overlapping descriptions will not be provided.

The battery module 100 may be seated in the internal space R of the pack housing 700. For example, the pack housing 700 may have one or more internal spaces R partitioned by the support frame 720, and one or more battery modules 100 may be accommodated in each internal space R.

The battery module 100 may be coupled to the lower frame 710 of the pack housing 700. For example, the battery module 100 may include sub-modules 200 and end plates 300 alternately stacked in a first direction (e.g., Z-axis direction), and as the first fastening member 510 is fastened to the lower frame 710 by penetrating the end plate 300 in a third direction (e.g., the Y-axis direction) perpendicular to the first direction (Z-axis direction), the battery module 100 may be fixed to the lower frame 710. The battery module 100 seated on the lower frame 710 may oppose the support frame 720 in a second direction (e.g., an X-axis direction) perpendicular to the first direction (Z-axis direction).

A venting hole 230 may be disposed on a surface opposing the support frame 720 in the battery module 100.

A venting passage 722 may be formed in the support frame 720. The venting passage 722 may be a flow path through which gas or fine particles may flow. For example, the venting passage 722 may be a tubular passage extending in a first direction (Z-axis direction) in the side frame 720a or the partition frame 720b. The venting passage 722 may have a single-layer or multilayer structure in the height direction (e.g., the Y-axis direction in FIG. 4) of the support frame 720. For example, referring to the cross-sectional diagram in FIG. 6, the venting passage 722 may be divided into three layers. In this case, the layers may be configured to communicate with each other or not to communicate with each other. However, the specific shape or path of the venting passage 722 is not limited to the above example, and may be provided in any shape as long as a passage extending from the internal space R of the pack housing 700 to the outlet 760 is provided.

Referring to FIG. 4. When the venting passage 722 is formed in the support frame 720, the venting passage 722 may communicate with the internal space R of the battery pack 10 through the opening 723. The opening 723 may oppose the venting hole 230 of the battery module 100. For example, the venting hole 230 may oppose the opening 723 disposed on the support frame 720 in the second direction (X-axis direction). Accordingly, gas or particles discharged from the venting hole 230 may flow into the venting passage 722 through the opening 723. Although not illustrated in the drawing, a flame prevention member (not illustrated) for reducing flame may be disposed in the opening 723. For example, the flame prevention member (not illustrated) may include one or more mesh members . The high-temperature gas or flame emitted from the venting hole 230 may decrease in temperature while passing through a flame prevention member (not illustrated), and accordingly, the size or strength of the flame may be reduced or the flame may be removed. Gas or particles entering the venting passage 722 may flow along the venting passage 722, and thermal energy or kinetic energy thereof may be gradually lowered and may be safely discharged to the outside of the battery pack 10 through the outlet 760 of the pack housing 700.

A guide block 721 inserted into the battery module 100 may be disposed in the pack housing 700 such that the battery module 100 may be assembled in an accurate position. For example, a plurality of guide blocks 721 protruding toward the internal space R of the battery pack 10 may be disposed on the side frame 720a and the partition frame 720b of the pack housing 700, respectively, and an insertion groove 310 into which the guide block 721 is inserted may be disposed in the battery module 100.

The insertion groove 310 may be formed in the end plate 300 of the battery module (100) . For example, insertion grooves 310 recessed in the second direction (X-axis direction) may be disposed on both ends of the end plate 300 in the second direction (X-axis direction). A plurality of insertion grooves 310 corresponding to the number of guide blocks 721 may be spaced apart from each other in a first direction (Z-axis direction) .

The insertion groove 310 and the venting hole 230 may be arranged in a first direction (Z-axis direction) on at least one side of the battery module 100. For example, as illustrated in FIG. 4, a venting hole 230 may be disposed between the plurality of insertion grooves 310 spaced apart from each other in the first direction (Z-axis direction).

The guide block 721 may guide the battery module 100 to be assembled in an accurate position. For example, in the process of seating the battery module 100 in the pack housing 700, the guide block 721 may be inserted into the insertion groove 310 and may allow the battery module 100 to be seated in an accurate position.

A gap may be present between the battery module 100 accommodated in the internal space R of the pack housing 700 and the support frame 720. For example, to allow the battery module 100 to be safely inserted, the length of the battery module 100 in the second direction (X-axis direction) may be configured to be smaller than the width of the internal space R of the pack housing 700 in the second direction (X-axis direction). Alternatively, a gap may be present between the battery module 100 and the support frame 720 due to manufacturing tolerances. The guide block 721 may be inserted into the end plate 300 and may cover the gap. Accordingly, a partition structure extending from the end plate 300 to the support frame 720 may be formed. Hereinafter, the guide block 721 will be described in detail.

The guide block 721 may protrude from the support frame 720 toward the internal space R. Alternatively, the guide block 721 may protrude toward the battery module 100 from the support frame 720. For example, when the side frame 720a of the support frame 720 extends from the edge of the lower frame 710 in the first direction (Z-axis direction), the guide block 721 may protrude toward the internal space R from the side frame 720a in a second direction (X-axis direction) perpendicular to the first direction.

The plurality of guide blocks 721 may be spaced apart from the support frame 720 in a first direction (Z-axis direction). Here, the first direction (Z-axis direction) may be the same as the direction in which the battery cells 210 included in the battery module 100 are stacked. An opening 723 of the support frame 720 may be disposed between the plurality of guide blocks 721. For example, as illustrated in FIG. 4, the guide block 721 and the opening 723 may be alternately disposed in a first direction (Z-axis direction) on a surface of the support frame 720 opposing the internal space R.

The number of openings 723 disposed between any two guide blocks 721 may vary. FIG. 4 illustrates a state in which one opening 723 is disposed between two neighboring guide blocks 721, but an example embodiment thereof is not limited thereto, and a plurality of openings 723 may be disposed between two neighboring guide blocks 721.

The four guide blocks 721 are provided in one support frame (e.g., side frame 720a) in FIG. 4, but an example embodiment thereof is not limited thereto, and the number of guide blocks 721 is limited thereto. That is, one to three or five or more guide blocks 721 may be disposed in one support frame. When one guide block 721 is disposed, the guide block 721 may be disposed between two openings 723 spaced apart from each other in a first direction (Z-axis direction).

The guide blocks 721 may be disposed on the two support frames 720 opposing each other, respectively. For example, guide blocks 721 protruding in opposite directions may be disposed on the side frame 720a and the partition frame 720b. The plurality of guide blocks 721 spaced apart from each other in the first direction (Z-axis direction) in the side frame 720a and the plurality of guide blocks 721 spaced apart from the partition frame 720b in the first direction may oppose each other in the second direction (X-axis direction) perpendicular to the first direction. (Z-axis direction) . That is, a pair of guide blocks 721 opposing each other in the second direction (X-axis direction) may be spaced apart from each other in the first direction (Z-axis direction) and a plurality of guide blocks 721 may be disposed in the pack housing 700. A pair of guide blocks 721 opposing each other in the second direction (X-axis direction) may be inserted into opposite surfaces of the battery module 100.

The guide block 721 may be integrally formed with the support frame 720. Alternatively, the guide block 721 may be formed as a separate member and coupled to the support frame 720. When the guide block 721 is provided as a separate member, the guide block 721 may be welded and coupled to the support frame 720. In this case, various welding methods including laser welding may be applied.

The guide block 721 may be inserted into the end plate 300 of the battery module 100.

Referring to FIG. 5, the end plate 300 may be a partition-shaped member having insertion grooves 310 into which guide blocks 721 may be inserted on both ends. However, the specific shape of the end plate 300 is not limited to the illustrated example.

The end plate 300 may oppose the sub-module 200 in a first direction (Z-axis direction) and may have insertion grooves 310 on both ends in a second direction (X-axis direction) . The insertion groove 310 may have a shape of a groove recessed in the second direction in an end of the end plate 300.

A contact protrusion (not illustrated) may be disposed in the insertion groove 310. The contact protrusion (not illustrated) may be in contact with the guide block 721 and may increase coupling strength between the guide block 721 and the insertion groove 310. For example, the contact protrusions (not illustrated) may be provided in the form of protrusions protruding from surfaces of the insertion groove 310 opposing each other, respectively. A plurality of contact protrusions (not illustrated) may be spaced apart from each other in a third direction (e.g., Y-axis direction). The contact protrusion (not illustrated) may be configured to press the guide block 721 inserted into the insertion groove 310, and accordingly, coupling strength between the end plate 300 and the guide block 721 may be further increased. However, contact protrusions (not illustrated) may not be provided. For example, the insertion groove 310 may be configured to have a flat surface without a contact protrusion (not illustrated).

The end plate 300 may be disposed between two neighboring sub-modules (e.g., 200 in FIGS. 3 and 4) and may prevent or block heat spread between the sub-modules (200 in FIGS. 3 and 4). To increase the heat blocking rate, a heat insulation member 320 may be disposed on at least a portion of the surface of the end plate 300. For example, as illustrated in FIG. 5, heat insulating members 320 may be disposed on both sides of the end plate 300.

The insulation member 320 may be disposed between the end plate 300 and the sub-module (200 in FIGS. 3 and 4). For example, one surface of the insulating member 320 may oppose the end plate 300, and the other surface opposite to the one surface may oppose the sub-module (200 in FIGS. 3 and 4).

The heat insulating member 320 may be attached to the end plate 300 by an adhesive material such as a binder. However, the coupling method between the heat insulating member 320 and the end plate 300 is not limited to the above, and any coupling method for fixing the elements to each other may be used.

The heat insulating member 320 may include a material having at least one of flame retardancy, heat resistance, heat insulation, and insulation. For example, heat resistance may refer to properties in which a shape does not melt or change even at a temperature of 600 degrees Celsius or more, and heat insulation may refer to properties in which thermal conductivity is 1.0 W/mK or less. For example, the heat insulating member 320 include at least a portion of materials such as mica, silicate, graphite, alumina, ceramic wool, and Aerogel for preventing spread of heat and/or flame. However, the material of the heat insulating member 320 is not limited thereto, and any material which may maintain a shape thereof and may prevent heat or flame from spreading to other adjacent battery cells 210 in a thermal runaway situation of the battery cell 210. However, in the battery module (e.g., 100 in FIGS. 2 to 4) of the example embodiments, the above-described heat insulating member 320 may not be provided.

The end plate 300 may be used a fastening region in which the battery module 100 is coupled to the pack housing 700, and may simultaneously block heat spread between the sub-modules 200.

Gas or particles emitted from the sub-module 200 may escape through a gap between the end plate 300 and the support frame 720. The guide block 721 may be combined with the end plate 300 to block such a gap, and may block gas or particles from escaping through the region between the end plate 300 and the support frame 720.

Referring to FIG. 6, a spacing P may be formed between the end plate 300 fastened to the lower frame 710 and the support frame 720. The guide block 721 may be inserted into the end plate 300 and may fill at least a portion of the spacing P. The guide block 721 may block gas or particles flowing into the spacing P.

The guide block 721 may be inserted into the end plate 300 and may form a partition structure extending from the end plate 300 to the support frame 720. By including the partition structure, gas or particles emitted from one sub-module 200 may be prevented from flowing to another sub-module 200 through the spacing P between the end plate 300 and the support frame 720.

Since at least a portion of the spacing P between the end plate 300 and the support frame 720 is filled by the guide block 721, gas or particles emitted from one sub-module 200 may intensively flow into the venting passage 722 of the support frame 720.

To allow the guide block 721 to be easily inserted into the end plate 300, at least a portion of surfaces of the guide block 721 may be configured as inclined surfaces. For example, referring to FIG. 7, a guide block 721 disposed between two openings 723 spaced apart from each other in a first direction (Z-axis direction) may be configured to have different widths on both ends in the direction (Y-axis direction) perpendicular to the first direction (Z-axis direction). By including this structure, at least a portion of surfaces of the guide block 721 may be configured to be inclined with respect to the third direction (Y-axis direction). Here, "width" may refer to a length in the first direction (Z-axis direction). Here, the first direction (Z-axis direction) may be the same as a direction in which battery cells (e.g., 210 in FIG. 3) included in the battery module (e.g., 100 in FIGS. 2 to 4) are stacked. Also, the third direction (Y-axis direction) may be a direction perpendicular to both the first direction (Z-axis direction) and the second direction (X-axis direction) in which the end plate 300 and the support frame 720 face each other.

In the structure in which the battery module (100 in FIGS. 2 to 4) is seated on the lower frame 710, a width D1 of the upper end (e.g., in a positive Y-axis direction) of the guide block 721 may be configured to be narrower than the width D2 of the lower end (e.g., a negative Y-axis direction) to be easily inserted into the insertion groove 310 of the end plate 300. The guide block 721 may easily enter the insertion groove 310 of the end plate 300 through the relatively narrow upper end. After the guide block 721 enters the insertion groove 310, the battery module (100 in FIGS. 2 to 4) may be seated in an accurate position while descending along the inclined surface of the guide block 721.

However, the specific shape of the guide block 721 is not limited to the above example. For example, the guide block 721 may have a rectangular cross-section without having an inclined surface. The guide block 721 may be configured in any shape in which the guide block 721 may be inserted into the insertion groove 310.

As the guide block 721 is inserted into the end plate 300, a partition structure preventing gas or particles from escaping through a gap between the end plate 300 and the support frame 720 may be formed. Accordingly, gas or particles generated in one portion of the battery module (100 in FIGS. 2 to 4) may intensively flow into the venting passage 722 of the support frame 720.

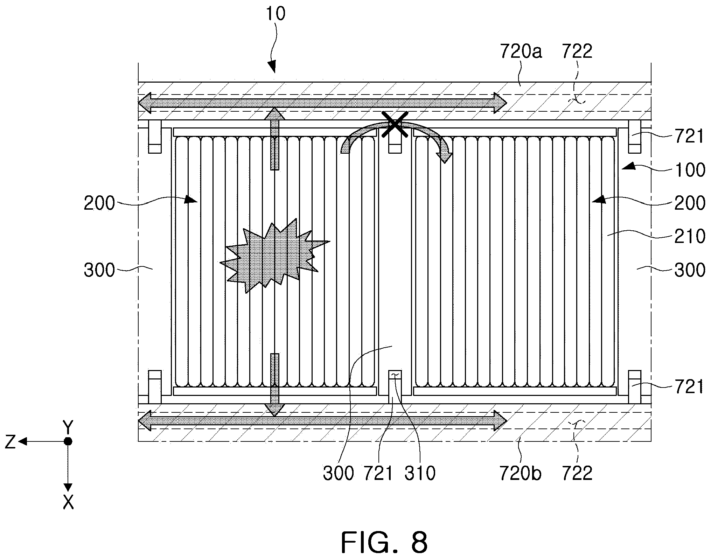

Hereinafter, with reference to FIG. 8, the flow of gas or particles in the battery pack 10 formed by the partition structure will be described.

FIG. 8 is a diagram illustrating a partition structure of a battery pack 10 according to an example embodiment. Since the described battery module 100 and the battery pack 10 including the same may correspond to the battery module 100 and the battery pack 10 described above with reference to FIGS. 1 to 7, overlapping descriptions may not be provided.

In a thermal runaway situation, gas or combustion particles generated inside the sub-module 200 may be emitted toward the pack housing 700. Gas or combustion particles emitted from the sub-module 200 may flow into the venting passage 722 formed in the support frame 720, may flow along the venting passage 722, and may be discharged to the outside of the battery pack 10 through the outlet 760.

The venting passage 722 may be formed along the length direction (e.g., Z-axis direction) of the support frame 720. For example, as illustrated in FIG. 8, a venting passage 722 extending in a first direction (Z-axis direction) may be formed in the side frame 720a and the partition frame 720b. For example, the venting passage 722 may be provided in a hollow shape penetrating in a first direction (Z-axis direction) in the support frame 720, and may have a single layer structure or a multilayer structure in a second direction (e.g., the Y-axis direction).

The venting passage 722 may communicate with the internal space R of the battery pack 10 through an opening of the support frame 720 (e.g., 723 in FIGS. 2 and 4). The opening 723 may oppose the sub-module 200. When the sub-module 200 and the end plate 300 of the battery module 100 are alternately arranged in the first direction (Z-axis direction), the opening (723 in FIGS. 2 and 4) may be disposed on a surface opposing the sub-module 200 in the second direction (X-axis direction) in the support frame 720. Gas or combustion particles ejected from the sub-module 200 may flow into the venting passage 722 through the opening (723 in FIGS. 2 and 4).

A predetermined spacing (e.g., P in FIG. 6) may be formed between the battery module 100 and the support frame 720, and Gas or particles generated in one sub-module 200 may flow along this spacing. The guide block 721 may partition across the spacing (P in FIG. 6) . For example, the guide block 721 may protrude from the support frame 720 toward the battery module 100 and may be inserted into the end plate 300 of the battery module 100. An insertion groove 310 into which the guide block 721 may be inserted may be disposed in the end plate 300. The insertion groove 310 of the end plate 300 and the guide block 721 may form an uneven coupling structure.

The guide block 721 may fill the gap between the end plate 300 and the support frame 720 such that gas or particles generated in one sub-module 200 may be prevented from flowing to another adjacent sub-module 200. Accordingly, as illustrated in FIG. 8, gas or particles generated in one sub-module 200 may intensively flow into the venting passage 722 of the support frame 720, and may not flow to other adjacent sub-modules 200

By the partition structure formed by the guide block 721 and the end plate 300, gas or particles generated in one sub-module 200 and flowing into and affecting another adjacent sub-module 200 may be reduced. Accordingly, chain thermal runaway or ignition may be prevented in the battery module 100.

Also, since gas or particles generated in the battery module 100 may not stay in the pack housing 700 for a long time and may swiftly flow through the venting passage 722, the excessive increase of temperature of the battery pack 10 may be prevented.

Also, since the battery module 100 may be swiftly placed in an accurate position through the guide block 721, manufacturing efficiency of the battery pack 10 may be increased.

According to the aforementioned example embodiment, the battery pack may reduce spreading of gas or particles generated in the battery module to other portions of the battery module or to other adjacent battery modules.

Also, gas or particles generated by the battery module may swiftly flow into the venting passage, and the internal temperature of the battery pack may be prevented from excessively increasing.

Also, since the battery module may be swiftly placed in an accurate position through the guide block, the manufacturing efficiency of the battery pack may be increased.

While the example embodiments have been illustrated and described above, it will be apparent to those skilled in the art that modifications and variations could be made without departing from the scope of the present disclosure as defined by the appended claims.

## Claims

1. A battery pack, comprising:
a pack housing having an internal space; and
a battery module including a plurality of battery cells and accommodated in the internal space,
wherein the pack housing includes a support frame opposing at least one side of the battery module and having a venting passage formed therein, and
wherein the support frame includes:
a plurality of guide blocks inserted into the battery module; and
an opening disposed between the plurality of guide blocks and communicating with the venting passage and the internal space.

2. The battery pack of claim 1,
wherein at least a portion of the plurality of battery cells are stacked in a first direction, and
wherein the plurality of guide blocks are spaced apart from each other in the first direction.

3. The battery pack of claim 2,
wherein at least one of the plurality of guide blocks protrudes from the support frame in a second direction toward the battery module, and
wherein the second direction is perpendicular to the first direction.

4. The battery pack of claim 3,
wherein both ends of at least one of the plurality of guide blocks in the third direction have different widths, and
wherein the third direction is perpendicular to both the first direction and the second direction.

5. The battery pack of anyone of claims 2 to 4, wherein the venting passage extends in the first direction from an internal portion of the support frame.

6. The battery pack of anyone of the preceding claims, wherein the battery module includes a plurality of insertion grooves into which the plurality of guide blocks are inserted.

7. The battery pack of claim 6, wherein the battery module further includes a venting hole disposed between the plurality of insertion grooves and opposing the opening.

8. The battery pack of claim 6 or 7,
wherein the battery module further includes one or more end plates opposing the plurality of battery cells, and
wherein the insertion groove is disposed on at least one end of the end plate.

9. The battery pack of claim 8,
wherein the battery module includes a plurality of sub-modules in which the plurality of battery cells are stacked in a first direction, and
wherein the plurality of sub-modules and the one or more end plates are alternately disposed in the first direction.

10. The battery pack of claim 9, wherein the battery module further includes an insulating member disposed between the one or more end plates and the sub-module.

11. The battery pack of claim 10, wherein the heat insulating member includes at least one of mica, ceramic wool, or Aerogel.

12. The battery pack of anyone of claims 8 to 11, further comprising:
a fastening member fastening the one or more end plates to the pack housing.

13. The battery pack of claim 12, wherein the fastening member is fastened to the pack housing by penetrating the one or more end plates in a direction perpendicular to the first direction.

14. The battery pack of anyone of the preceding claims, wherein the plurality of guide blocks are configured to guide a position where the battery module is seated in the pack housing.

15. The battery pack of anyone of the preceding claims, wherein the battery module includes a plurality of insertion grooves into which the plurality of guide blocks are inserted, and wherein a width of upper end of the guide block is narrower than a width of the insertion groove.
